# FASCICULE DE BREVET EUROPEEN

(11) **EP 3 005 505 B1**
(45) Date de publication et mention de la délivrance du brevet: **18.10.2017**
(21) Numéro de dépôt: 14731308.4
(22) Date de dépôt: 21.05.2014
(51) Int. Cl.: H02G 3/18

(54) **BOITE DE SOL POUR APPAREILLAGES ELECTRIQUES AVEC UN COFFRAGE PERDU EXTRACTIBLE**
BODENBOX FÜR ELEKTRISCHE VORRICHTUNGEN MIT ENTNEHMBARER PERMANENTER SCHALUNG
FLOOR BOX FOR ELECTRICAL APPARATUSES WITH EXTRACTIBLE PERMANENT FORMWORK

(30) Priorité: 06.06.2013 FR 1355208
(43) Date de publication de la demande: 13.04.2016
(73) Titulaire: Legrand France, 87000 Limoges (FR); Legrand SNC, 87000 Limoges (FR)
(72) Inventeur: BUARD, Yvon, F-53600 Voutre (FR)
(74) Mandataire: Orsini, Fabienne
(86) Numéro de dépôt international: PCT/FR2014/051196
(87) Numéro de publication internationale: WO 2014/195599

(56) Documents cités:
- EP-A1- 1 376 805
- DE-U1- 7 627 228
- DE-U1- 29 607 193
- DE-U1-202010 016 788

## Description

### DOMAINE TECHNIQUE AUQUEL SE RAPPORTE L'INVENTION

La présente invention concerne une boîte de sol à encastrer dans une chape coulée sur un sol.

Elle concerne plus particulièrement une boîte comprenant :
- une embase destinée à être fixée sur le sol, comprenant une paroi qui délimite un logement avec une ouverture frontale opposée à un fond plat, et
- un capot comportant une paroi frontale bordée par au moins une paroi latérale, rapporté sur l'embase de sorte que la paroi frontale ferme l'ouverture frontale dudit logement.

L'invention trouve une application particulièrement avantageuse dans la réalisation d'une boîte de sol pour appareillages électriques tels que des prises de courant fort et de courant faible, des interrupteurs électriques.

### ARRIERE-PLAN TECHNOLOGIQUE

On connaît des documents DE29607193 ou DE7627228U une boîte de sol telle que définie ci-dessus dans laquelle la paroi de l'embase comporte un rebord intérieur en équerre qui réduit la section de l'ouverture frontale du logement et la paroi latérale du capot comporte un rebord extérieur en équerre fixé sur le rebord intérieur de la paroi de l'embase.

L'inconvénient majeur d'une telle boîte de sol est que le capot ne peut être extrait de la chape sans qu'il soit découpé du fait de son rebord extérieur en équerre qui est noyé dans la chape et qui empêche toute extraction du capot par simple traction.

En outre, on connaît du document EP1376805 une boîte de sol du type précité dans laquelle le capot formant un coffrage perdu est inséré via l'ouverture frontale à l'intérieur du logement de l'embase fixée au sol.

Une telle boîte présente cependant plusieurs inconvénients.

Tout d'abord son capot est relativement encombrant puisqu'il comporte une paroi latérale d'une hauteur importante pour s'élever depuis l'embase jusqu'au-dessus de la paroi qu'elle porte.

En outre, l'insertion d'une partie du capot à l'intérieur du logement délimité par la paroi de l'embase ne permet pas de garantir une bonne étanchéité et, lors du coulage de la chape, du béton peut s'infiltrer dans ledit logement entre la paroi de l'embase et la paroi latérale du capot.

### OBJET DE L'INVENTION

Afin de remédier aux inconvénients de l'état de la technique précité, la présente invention propose une boîte de sol telle que définie en introduction, dans laquelle une partie du bord libre de la paroi latérale du capot est positionnée bord à bord avec une partie du bord libre de la paroi de l'embase tandis qu'une partie de la paroi latérale du capot, s'étendant perpendiculairement au fond plat de l'embase, recouvre partiellement la face externe de la paroi de l'embase de manière que le capot forme un coffrage perdu à extraire de la chape coulée autour de la boîte de sol.

Avantageusement, dans l'invention le capot présente de petites dimensions, il est donc peu coûteux à réaliser et il s'extrait de la chape coulée, facilement à la main sans outils.

Au surplus, dans l'invention, du fait que le capot recouvre partiellement la face externe de la paroi de l'embase délimitant le logement situé dans la chape, il assure une bonne étanchéité et évite toute infiltration de béton à l'intérieur dudit logement lors du coulage de la chape.

D'autres caractéristiques non limitatives et avantageuses de la boîte de sol conforme à l'invention sont les suivantes :
- chaque paroi de l'embase est rapportée sur le fond plat de l'embase ;
- la paroi de l'embase comporte au moins un panneau vertical, s'élevant perpendiculairement au fond plat, pourvu de découpes qui délimitent au moins une portion retirable pour former une ouverture d'accueil d'une extrémité d'un conduit de cheminement positionné sur le sol ;
- la face interne dudit panneau vertical comprenant lesdites découpes est recouverte d'un film de protection adhésif retirable qui obture lesdites découpes ;
- l'embase comporte quatre parois latérales raccordées entre elles par des coins pour délimiter un logement parallélépipédique et la paroi frontale du capot présente un contour carré ou rectangulaire bordé par quatre parois latérales qui recouvrent partiellement les faces externes des parois latérales de l'embase, les coins du capot étant positionnés bord à bord avec les coins de l'embase ;
- chaque coin de l'embase est une pièce monobloc moulée en matière plastique ou synthétique fixée sur le fond plat au moyen d'une vis ;
- chaque coin de l'embase comprend deux montants verticaux orientés à angle droit l'un part rapport à l'autre et reliés l'un à l'autre par une partie centrale formant un angle, les deux montants verticaux et la partie centrale étant surmontés d'une plate-forme horizontale formant un appui pour deux parois latérales adjacentes de l'embase, chaque coin comportant en outre une cornière s'élevant perpendiculairement à ladite plate-forme et comprenant un bord libre placé bord à bord avec le bord d'une découpe prévue dans un des quatre coins du capot ;
- la plate-forme de chaque coin de l'embase comporte à l'arrière, de part et d'autre de la cornière, un puits taraudé de réception d'une vis, qui débouche sur ladite plate-forme pour la fixation d'une paroi latérale de l'embase audit coin, et la partie centrale de chaque coin de l'embase comporte à l'arrière un puits taraudé qui débouche à la base du coin, à l'opposé de ladite plate-forme, pour la réception d'une vis de fixation dudit coin au fond plat de l'embase ;
- la plate-forme de chaque coin de l'embase porte en saillie un tenon engagé dans un logement d'une paroi latérale de l'embase pour assurer le bon positionnement de ladite paroi latérale par rapport audit coin ;
- chaque paroi latérale de l'embase se présente sous la forme d'une cornière en angle droit dont une aile longitudinale forme un panneau vertical positionné perpendiculairement au fond plat de l'embase, ce panneau vertical présentant deux extrémités qui recouvrent partiellement la face externe de montants verticaux de deux coins de l'embase, et dont l'autre aile longitudinale forme un panneau horizontal positionné parallèlement audit fond plat de l'embase, ce panneau horizontal présentant deux extrémités en appui sur les plates-formes desdits deux coins de l'embase, et comportant un retour vertical qui s'étend dans le prolongement de deux ailes des cornières desdits deux coins situées le long d'un même côté de l'embase, pour fermer l'espace entre lesdites cornières, la face externe de ce retour étant partiellement recouverte par une paroi latérale du capot ;
- le fond plat de l'embase est formé par une plaque pleine ;
- le fond plat de l'embase est formé par un cadre plat ;
- le fond plat et chaque paroi latérale de l'embase sont réalisés en tôle ;
- la paroi frontale du capot comporte au moins une fente qui délimite une partie repliable pour former une zone de prise en main du capot par un installateur afin de l'extraire de sa coopération avec l'embase ; et
- le capot est réalisé en tôle découpée et pliée.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue éclatée d'un mode de réalisation préféré d'une boîte de sol selon l'invention ;
- la figure 2 est une vue de l'embase et du capot non assemblés de la boîte de sol de la figure 1 ;
- la figure 3 est une vue assemblée de la boîte de sol de la figure 1 ;
- la figure 4 est une vue en perspective d'un coin de l'embase de la boîte de sol de la figure 1 ;
- la figure 5 est une vue de dessous du coin de la figure 4 ;
- les figures 6 à 9 sont des vues en perspective de détail montrant l'assemblage d'un angle de la boîte de sol de la figure 1 ;
- la figure 10 est une vue de face de la tôle constituant le capot de la boîte de sol de la figure 1, découpée non pliée ;
- la figure 11 est une vue en perspective de dessus du capot de la boîte de la figure 1 ;
- les figures 12 et 13 sont des vues en perspective de dessus et de dessous du capot de la figure 11 dans la paroi frontale duquel deux ouvertures ont été créées pour sa prise en main ;
- les figures 14 à 21 sont des vues en perspective de dessus de différentes variantes du capot de la boîte de sol selon l'invention ;
- la figure 22 est une vue en perspective du capot de la figure 20 dans la paroi frontale duquel deux anses ont été créées pour sa prise en main ; et
- les figures 23 et 24 sont des vues en perspective de dessus du capot de la figure 21 dans la paroi frontale duquel deux anses ont été créées pour sa prise en main.

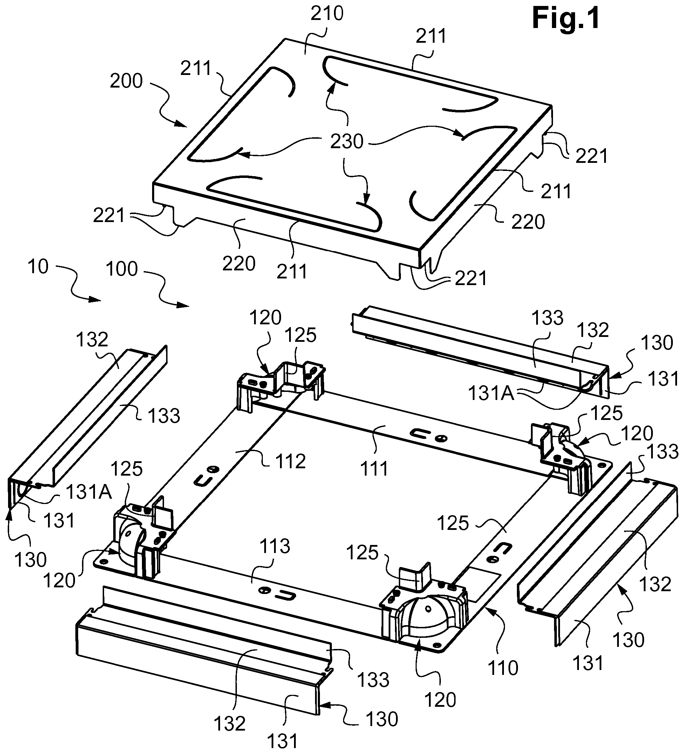

Sur les figures 1 à 3, on a représenté un mode de réalisation préférentiel d'une boîte de sol 10 à encastrer dans une chape coulée sur un sol.

Cette boîte comprend une embase 100 et un capot 200 rapporté sur l'embase 100.

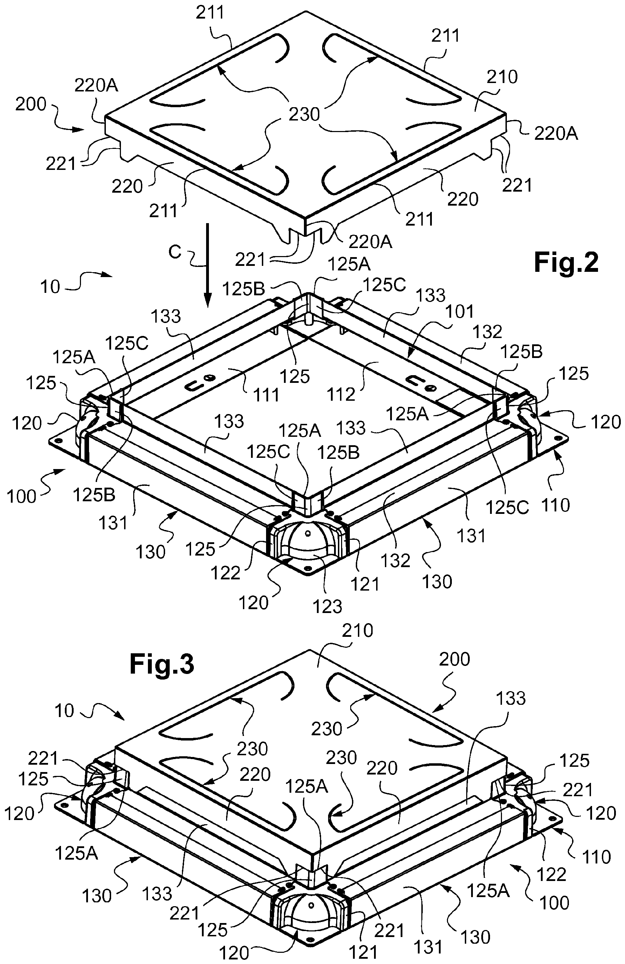

L'embase 100 est destinée à être fixée sur le sol, elle comprend un fond plat 110 et une paroi 120, 130 qui délimite un logement avec une ouverture frontale 101 opposée au fond plat 110 (voir figure 2).

Le capot 200 comporte une paroi frontale 210 bordée par au moins une paroi latérale 220. Il est rapporté sur l'embase 100 de sorte que sa paroi frontale 210 ferme l'ouverture frontale 101 du logement de l'embase 100 (voir figure 3).

Selon une caractéristique particulièrement avantageuse de la boîte de sol 10, une partie 221 du bord libre de la paroi latérale 220 du capot 200 est positionnée bord à bord avec une partie du bord libre 125A de la paroi 125 de l'embase 100 tandis qu'une partie de la paroi latérale 220 du capot 200, s'étendant perpendiculairement au fond plat 110 de l'embase 100, recouvre partiellement la face externe de la paroi 133 de l'embase 100 de manière que le capot 200 forme un coffrage perdu à extraire de la chape coulée autour de la boîte de sol (voir figure 3).

Comme le montrent les figures 1 à 3 et 6 à 9, selon le mode de réalisation représenté, l'embase 200 est réalisée en plusieurs pièces assemblées.

Le fond plat 110 de l'embase 100 est ici avantageusement un cadre plat formé par des bandes 111, 112, 113, 114 de tôle assemblées entre elles. Ce cadre présente ici un contour carré avec quatre branches rectilignes. Un tel cadre permet de réaliser des économies de matériaux utilisés.

Mais selon une variante de réalisation non représentée, on peut prévoir que le fond plat de l'embase est formé par une plaque pleine au contour carré ou rectangulaire.

On peut également prévoir selon une autre variante non représentée qu'à l'inverse d'une plaque pleine, le fond plat de l'embase soit formé uniquement par les surfaces de contact avec le sol de plots ou de pieds supports de ladite embase.

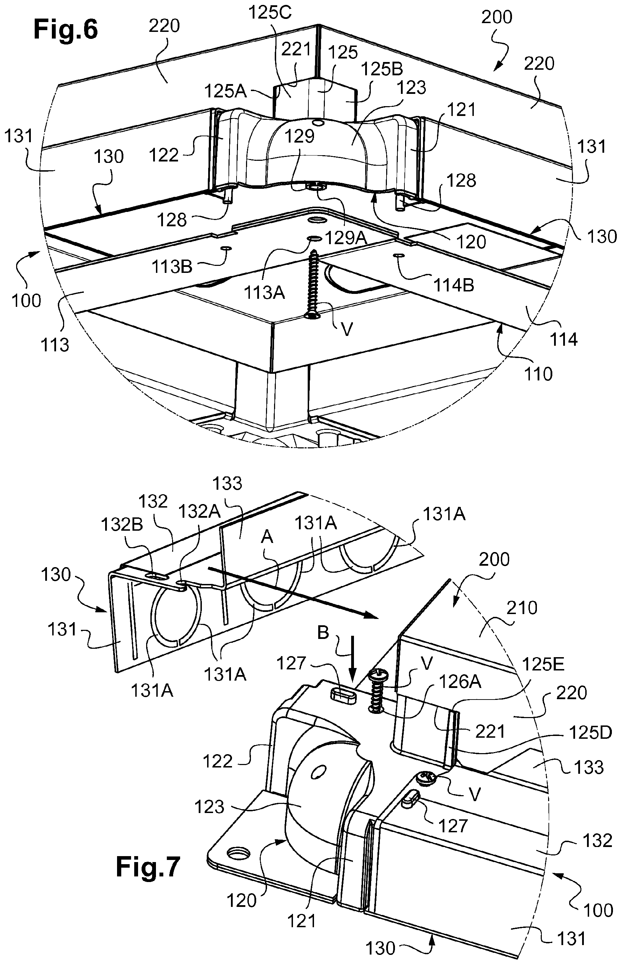

Comme le montrent plus particulièrement les figures 1 et 6, les bandes 111, 112, 113, 114 du cadre sont assemblées par l'intermédiaire de quatre coins 120.

Chaque coin 120 est une pièce monobloc réalisée par moulage d'une matière plastique ou synthétique fixée au fond plat 110 de l'embase 100 au moyen d'une vis.

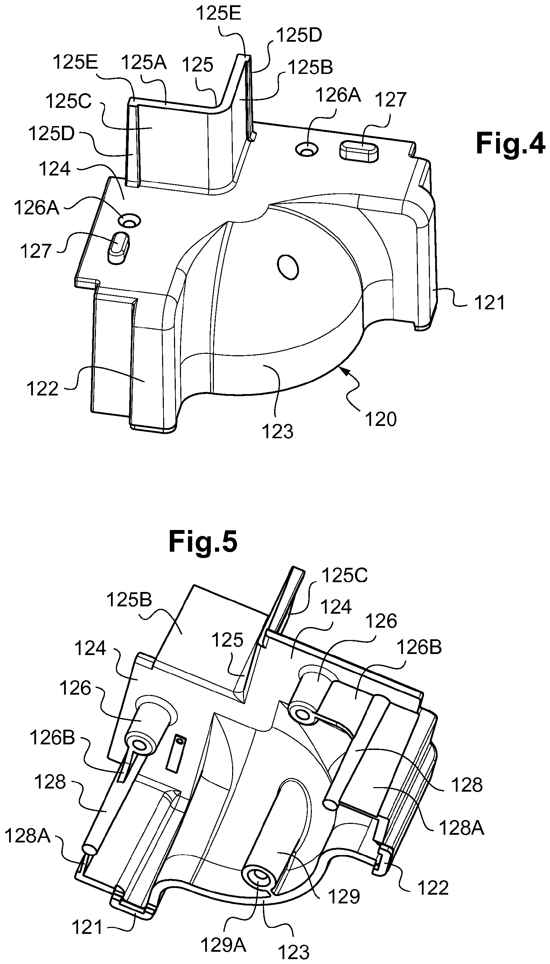

Comme le montrent plus particulièrement les figures 4 et 5, chaque coin 120 de l'embase 100 comprend deux montants verticaux 121, 122 orientés à angle droit l'un part rapport à l'autre et reliés l'un à l'autre par une partie centrale 123 formant un angle. Les deux montants verticaux 121, 122 et la partie centrale 123 sont surmontés d'une plate-forme horizontale 124 à angle droit qui porte une cornière 125 avec deux ailes 125B, 125C en angle droit s'élevant perpendiculairement à ladite plate-forme 124 et comprenant un bord libre 125A.

Lorsque les coins 120 sont fixés aux bandes 111, 112, 113, 114 du fond plat 110, les cornières 125 s'ouvrent vers l'intérieur du cadre (voir figure 1).

En outre, comme le montre la figure 5, la face arrière de la plate-forme 124 de chaque coin 120 porte, de part et d'autre de la cornière 125, deux parois cylindriques 126 taraudées intérieurement et délimitant deux puits qui débouchent par des embouchures 126A sur la face avant de ladite plate-forme 124 pour la réception de vis V (voir figure 7). Les parois cylindriques 126 taraudées des puits sont chacune extérieurement reliées par une aile de rigidification 126B à un pilier 128 qui s'étend perpendiculairement à la face arrière de la plate-forme 124. Chaque pilier 128 est lié par une aile de rigidification 128A à la face arrière d'un montant vertical 121, 122 du coin 120 (voir figure 5). La face arrière de la partie centrale 123 de chaque coin 120 porte une paroi cylindrique 129 taraudée intérieurement et délimitant un puits qui débouche par une embouchure 129A située à la base du coin 120, à l'opposé de ladite plate-forme 124. Ce puits reçoit une vis V pour la solidarisation dudit coin 120 au fond plat 110 de l'embase 100 (voir figure 6).

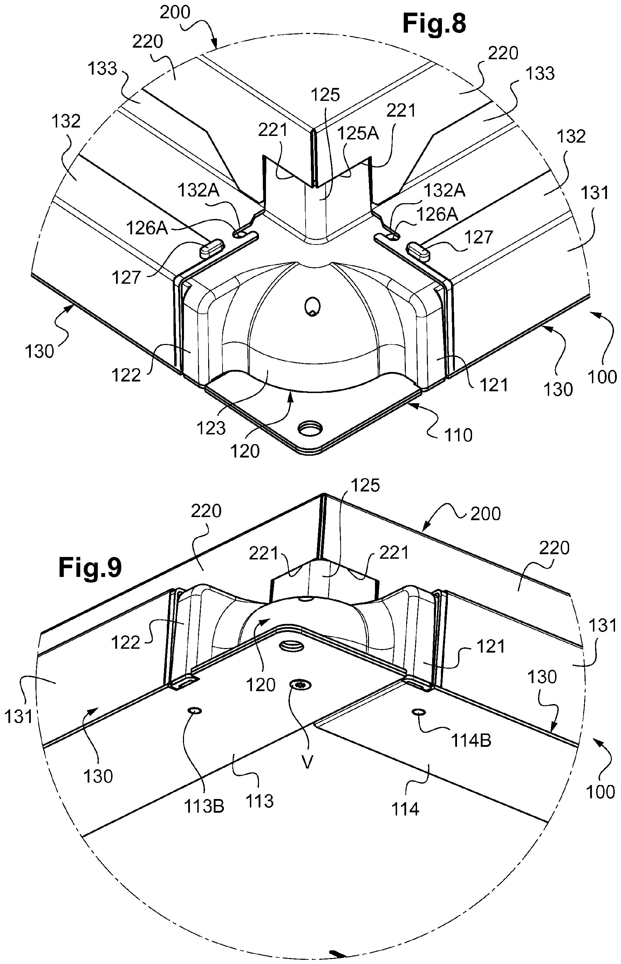

Comme le montrent plus particulièrement les figures 6 et 9, chaque coin 120 est solidarisé aux bandes 111, 112, 113, 114 du fond plat 110 de l'embase 100 par l'intermédiaire de la vis V qui traverse deux orifices 113A superposés prévus dans deux extrémités superposées des bandes 113,114 et qui est vissée dans le puits 129 tandis que les extrémités libres des piliers 128 du coin 120 sont engagées dans d'autres orifices 113B, 114B prévus dans lesdites bandes 113, 114, pour solidariser les deux bandes 113, 114 l'une à l'autre en étant orientées à 90 degrés l'une par rapport à l'autre.

Comme le montre la figure.4, la plate-forme 124 de chaque coin 120 de l'embase 100 porte en saillie, à proximité de chaque embouchure 126A, un tenon 127 ici de forme oblongue.

Par ailleurs, selon l'exemple représenté sur les figures 1 à 3, l'embase 100 comporte quatre parois latérales 130 raccordées entre elles par les coins 120 pour délimiter le logement parallélépipédique avec l'ouverture frontale 101.

Chaque paroi latérale 130 de l'embase 100 est réalisée en tôle découpée et pliée.

Elle se présente sous la forme d'une cornière en angle droit avec deux ailes longitudinales 131, 132.

L'une des ailes longitudinales 131 forme un panneau vertical positionné perpendiculairement au fond plat 110 de l'embase 100. Le panneau vertical 131 de chaque paroi latérale 130 de l'embase 100 présente deux extrémités qui recouvrent partiellement la face externe de montants verticaux 121, 122 de deux coins 120 adjacents de l'embase 100.

L'autre aile longitudinale 132 forme un panneau horizontal positionné parallèlement audit fond plat 110 de l'embase 100. Le panneau horizontal 132 présente deux extrémités en appui sur les plates-formes 124 desdits deux coins 120 adjacents de l'embase 100 (voir figures 7 et 8).

En outre, le panneau horizontal 132 de chaque paroi latérale 130 comporte un retour vertical 133 qui s'étend dans le prolongement de deux ailes 125B, 125C des cornières 125 desdits deux coins 120 adjacents, situées le long d'un même côté de l'embase 100, pour fermer l'espace entre lesdites cornières 125 et former une continuité de paroi périphérique qui délimite l'ouverture frontale 101 du logement de l'embase 100 (voir figure 2).

Chaque panneau horizontal 132 de chaque paroi latérale 130 de l'embase 100 comprend à proximité de chaque bord latéral d'extrémité, un logement 132B au contour oblong (ici une ouverture oblongue) et une encoche 132A au fond arrondi pour la fixation de ladite paroi latérale 130 à deux coins 120 adjacents de l'embase 100 (voir figure 7).

Comme le montre plus particulièrement la figure 7, chaque paroi latérale 130 est rapportée suivant la flèche A sur deux coins adjacents 120 de l'embase 100 de telle manière que chaque encoche 132A s'engage sur le fût d'une vis V vissée partiellement dans le puits taraudé 126 d'un coin 120. Puis la vis V est complètement vissée dans son puits de manière à plaquer suivant la flèche B la paroi latérale 130 contre les coins 120 en engageant chaque logement 132B du panneau horizontal 132 de la paroi latérale 130 sur chaque tenon 127 porté par chaque plate-forme 124 de chaque coin 120. La coopération des logements 132B de chaque paroi latérale 130 avec les tenons 127 des coins 120 assure un bon positionnement de la paroi latérale 130 sur lesdits coins 120 en recouvrant partiellement la face externe des plates-formes 124 et des montants verticaux 121, 122 desdits coins 120.

Les plates-formes 124 des coins 120 de l'embase 100 forment alors un appui pour les parois latérales 130 de l'embase 100.

Avantageusement, le panneau vertical 131 d'au moins une paroi latérale 130 de l'embase 100 est pourvu de découpes 131A qui délimitent au moins une portion retirable pour former une ouverture d'accueil d'une extrémité d'un conduit de cheminement positionné sur le sol (voir figures 1 et 7).

Dans ce cas, on peut prévoir que la face interne dudit panneau vertical 131 comprenant lesdites découpes est recouverte d'un film de protection adhésif retirable qui obture lesdites découpes 131A afin d'éviter lors du coulage de la chape qu'une faible partie du béton entre dans le logement intérieur de la boîte de sol 10.

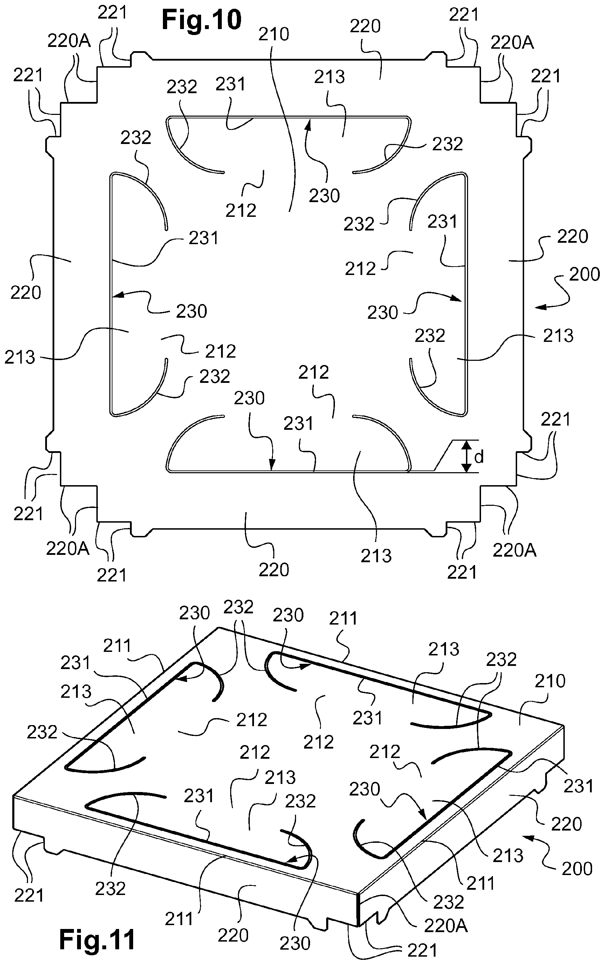

Sur les figures 10 et 11, on a représenté isolément le capot 200 de la boîte de sol 10 de la figure 1.

Ce capot 200 est réalisé en tôle ou en feuille métallique découpée et pliée (voir figure 10).

La feuille métallique présente ici un contour globalement carré, avec aux quatre coins, une première découpe 220A en angle droit encadrée par deux autres découpes 221 en angle droit (voir figure 10).

Après pliage des quatre côtés 220 de la feuille métallique, suivant quatre lignes de pliage 211 de façon à rapprocher l'un contre l'autre les bords des quatre encoches 220A, le capot 200 comporte une paroi frontale 210 au contour rectangulaire 211, ici carré, bordé par quatre parois latérales 220 perpendiculaires jointives aux quatre coins 220A du capot 200. Chaque paroi latérale 220 du capot 200 comporte au niveau d'un coin 220A une découpe 221 en angle droit.

Comme le montrent plus particulièrement les figures 2 et 3, le capot 200 est rapporté sur l'embase 100 suivant la flèche C de sorte que :
- sa paroi frontale 210 ferme l'ouverture frontale 101 du logement de l'embase 100 donc le logement intérieur de la boîte de sol 10,
- les parois latérales 220 du capot 200 qui s'étendent perpendiculairement au fond plat 110 de l'embase 100, recouvrent partiellement les faces externes des retours 133 des parois latérales 130 de l'embase 100, et
- les bords des découpes 221 prévues dans les parois latérales 220 au niveau des coins 220A du capot 200 sont positionnés bord à bord avec le bord libre 125A des cornières 125 des coins 120 de l'embase 100. En d'autres termes, les coins 220A du capot 200 sont positionnés bord à bord avec les coins 125 de l'embase 100.

Avantageusement, comme le montrent plus particulièrement les figures 4 et 7, les ailes 125B, 125C des cornières 125 des coins 120 de l'embase 100, comprennent chacune une nervure 125D qui s'étend depuis le bord libre 125A le long du bord libre vertical de l'aile de la cornière. Ces nervures 125D forment une surépaisseur 125E aux extrémités du bord libre 125A pour améliorer l'appui du bord libre 221 du capot 200 sur le bord libre 125A de la cornière de l'embase 100.

De cette manière, le capot 200 protège le logement intérieur de la boîte de sol 10 lorsque la chape est coulée sur le sol, en le fermant frontalement et il constitue un coffrage perdu qui peut être facilement extrait de la chape après son durcissement.

Comme le montrent les figures 10 à 24, selon une caractéristique particulièrement avantageuse de la boîte de sol 10 selon l'invention, la paroi frontale 210 du capot 200 comporte au moins une fente 230 ; 240 ; 250 ; 260 ; 270 ; 280 ; 290 ; 330 ; 340 qui délimite une partie repliable 213 pour former une zone 212 de prise en main du capot 200 par un installateur afin de l'extraire de sa coopération avec l'embase 100.

Ainsi, grâce à cette caractéristique, l'installateur peut facilement sans outil prendre en main le capot 200 pour l'extraire de la chape coulée et durcie sur le sol.

Selon une caractéristique avantageuse, chaque fente 230 ; 240 ; 250 ; 260 ; 270 ; 280 ; 290 ; 330 ; 340 présente une largeur d (voir figure 10) comprise entre 0,2 et 2 mm.

Lorsque la fente est réalisée par découpe, c'est-à-dire avec un enlèvement de matière, elle présente une largeur d comprise entre 1 et 2 mm, préférentiellement égale à 1,5 mm de manière à éviter qu'une quantité importante de béton passe au travers d'une fente du capot 200 lors du coulage de la chape sur le sol.

Lorsque la fente est réalisée par cisaillage, elle présente une largeur comprise entre 0,2 et 1 mm, préférentiellement égale au jeu de cisaillage d'environ 0,2 mm (à l'oeil nu les bords de la fente apparaissant bord à bord).

Selon les modes de réalisation du capot 200 représentés sur les figures 10 à 16 et 18, la paroi frontale 210 du capot 200 comporte une pluralité de fentes 230 ; 240 ; 250 ; 260 ; 280 qui délimitent chacune une partie repliable 213. Ici, la paroi frontale 210 du capot 200 comporte deux couples de fentes 230 ; 240 ; 250 ; 260 ; 280 positionnées face à face délimitant des parties repliables 213 en vis-à-vis.

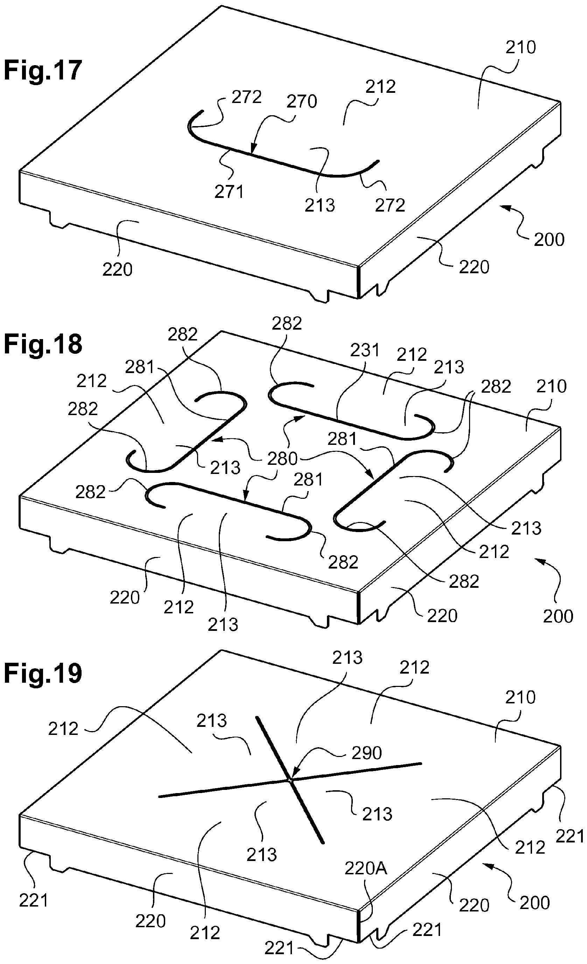

Selon le mode de réalisation du capot 200 représenté sur la figure 17, la paroi frontale 210 du capot 200 comporte en son centre une seule fente 270 qui délimite une seule partie repliable 213.

Selon le mode de réalisation du capot 200 représenté sur la figure 19, la paroi frontale 210 du capot comporte une seule fente 290 qui délimite une pluralité de parties repliables 213. Ici, ladite fente 290 présente la forme d'une croix centrée sur le centre de la paroi frontale 210 qui délimite quatre parties repliables 213 en forme de triangle dont les sommets sont disjoints et orientés vers le centre de la paroi frontale 210.

Selon les modes de réalisation représentés sur les figures 10 à 18, chaque fente comporte une partie longitudinale 231 ; 241 ; 251 ; 261 ; 271 ; 281 avec deux extrémités recourbées 232 ; 242 ; 252 ; 262 ; 272 ; 282. Selon les modes de réalisation représentés sur les figures 11, 14, 15 et 18, les extrémités recourbées 232 ; 242 ; 252 ; 282 sont orientées l'une vers l'autre. Entre les parties recourbées 232 ; 242 ; 252 ; 262 ; 272 ; 282 sont définies des lignes de pliage qui s'étendent d'une extrémité recourbée à l'autre.

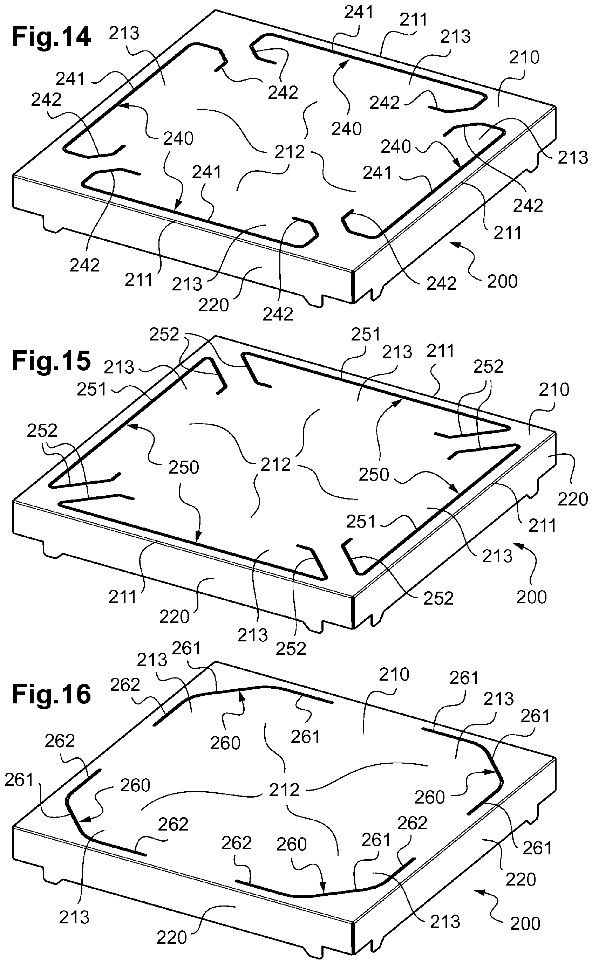

Selon les modes de réalisation représentés sur les figures 10 à 15, la partie longitudinale 231 ; 241 ; 251 de chaque fente 230 ; 240 ; 250 longe un bord 211 de la paroi frontale 210 du capot 200, tandis que selon le mode de réalisation représenté sur la figure 18, la partie longitudinale 281 de chaque fente 280 est située vers le centre de la paroi frontale 210 et les extrémités recourbées 282 sont orientées vers un bord 211 de la paroi frontale 210 du capot 200. Selon le mode de réalisation représenté sur la figure 16, chaque fente 260 est située le long d'un coin de la paroi frontale 210 du capot 200.

Lorsque la partie longitudinale de chaque fente longe un bord de la paroi frontale du capot, la pression exercée par le béton sur les parties fendues du capot est avantageusement diminuée.

Lorsque la partie longitudinale de chaque fente est située vers le centre de la paroi frontale du capot, la zone de prise en main se situe plus proche des bords du capot et la force de traction exercée par l'installateur sur le capot facilite la séparation entre le béton coulé et le capot.

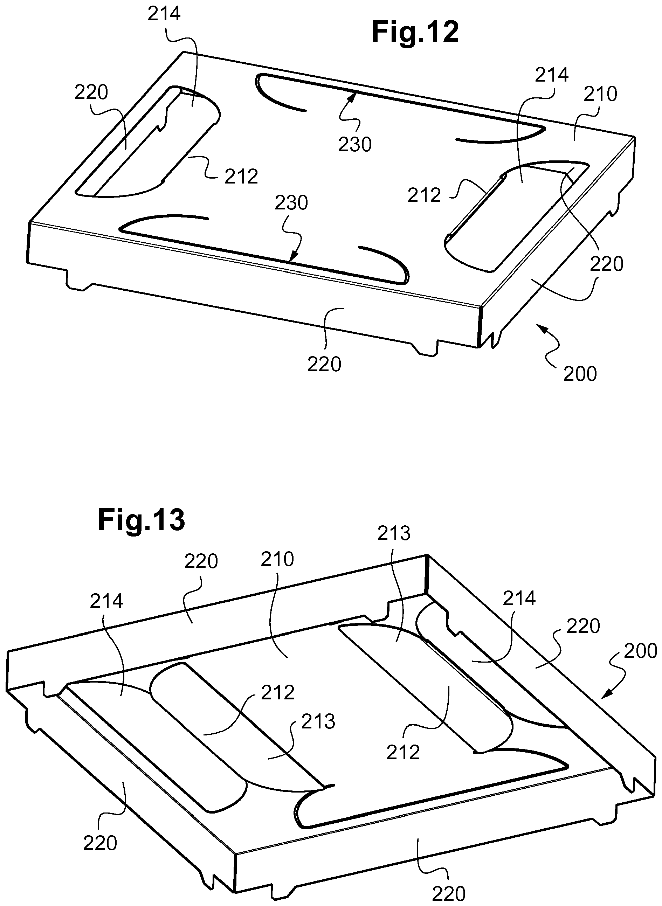

Selon les modes de réalisation représentés sur les figures 10 à 19, chaque partie repliable 213 est rabattable contre une face arrière de la paroi frontale 210 du capot 200 pour former dans la paroi frontale 210 une ouverture 214 au travers de laquelle l'installateur peut prendre en main le capot 200 au niveau de sa zone de prise en main 212 (voir figures 12 et 13).

Avantageusement, dans le capot 200 représenté sur les figures 10 à 16, 18 et 19, en rabattant deux parties repliables 213, l'installateur peut créer deux zones 212 de prise en main en vis-à-vis (voir figures 12 et 13) pour prendre le capot 200 avec ses deux mains et facilement l'extraire de la chape.

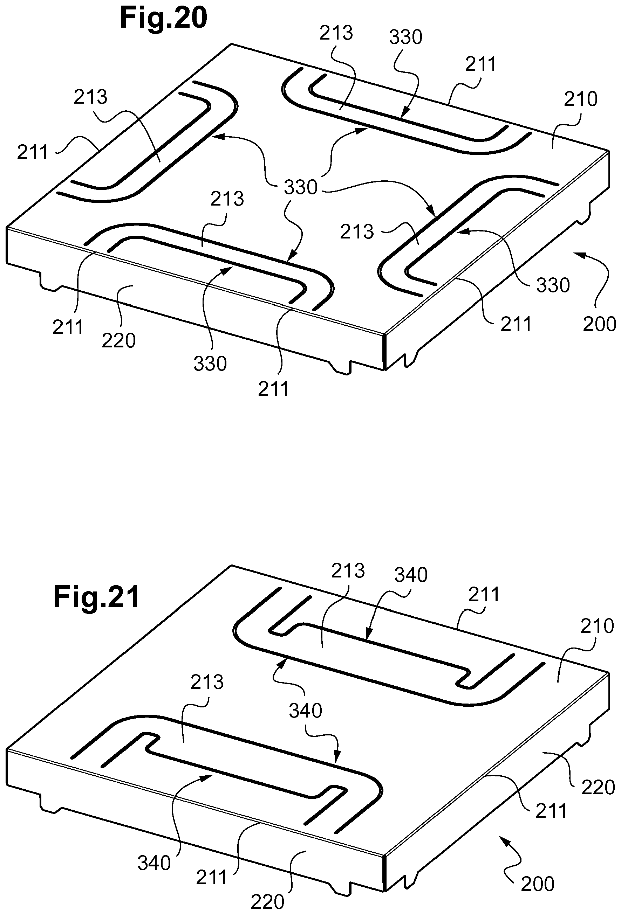

Selon les modes de réalisation du capot 200 représentés sur les figures 20 à 24, la paroi frontale 210 du capot 200 comporte une pluralité de fentes 330 ; 340 qui délimitent deux à deux entre elles une seule partie repliable 213.

Chaque partie repliable 213 est relevable en saillie de la face avant de la paroi frontale 210 du capot 200 pour former une anse 213 attachée à la paroi frontale 210 du capot 200, avec une zone de prise en main 212 par laquelle l'installateur peut prendre en main le capot 200 pour l'extraire de sa coopération avec l'embase et de la chape coulée et durcie sur le sol.

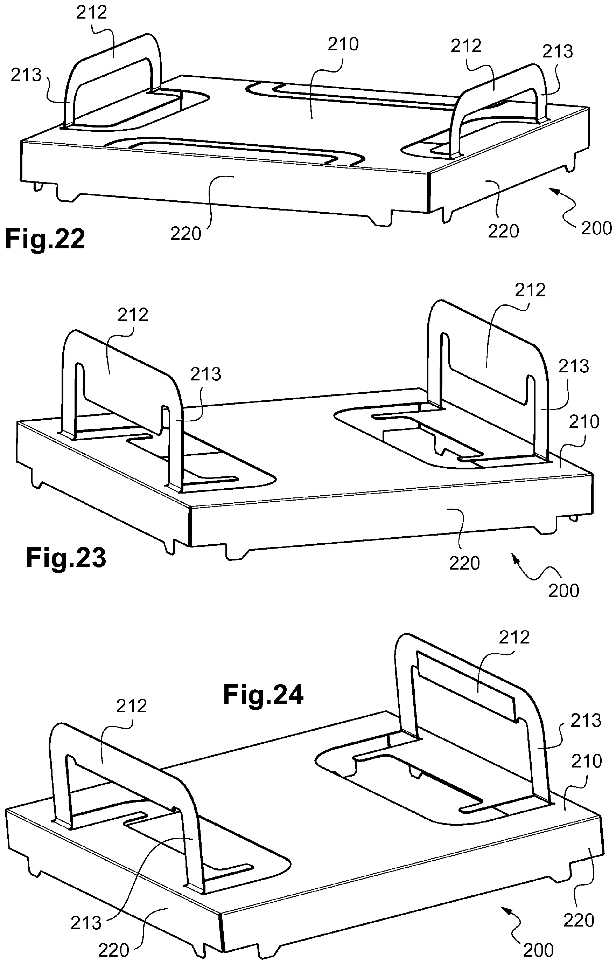

Avantageusement, comme le montrent plus particulièrement les figures 23 et 24, les fentes 340 du capot 200 présentent une trajectoire telle que chaque anse 213 formée comporte une partie 212 repliable sur elle-même pour réaliser une zone de prise en main sans bord coupant. De cette manière, l'installateur peut prendre en main le capot 200 par deux anses 213 sans risquer de se blesser.

La présente invention n'est nullement limitée aux modes de réalisation décrits et représentés mais l'homme du métier saura y apporter toute variante.

## Revendications

1. Boîte de sol (10) à encastrer dans une chape coulée sur un sol, ladite boîte comprenant :
- une embase (100) destinée à être fixée sur le sol, comprenant une paroi (120,130) qui délimite un logement avec une ouverture frontale (101) opposée à un fond plat (110), et
- un capot (200) comportant une paroi frontale (210) bordée par au moins une paroi latérale (220), rapporté sur l'embase (100) de sorte que la paroi frontale (210) ferme l'ouverture frontale (101) dudit logement,
**caractérisée en ce qu'**une partie du bord libre (221) de la paroi latérale (220) du capot (200) est positionnée bord à bord avec une partie du bord libre (125A) de la paroi (125) de l'embase (100) tandis qu'une partie de la paroi latérale (220) du capot (200), s'étendant perpendiculairement au fond plat (110) de l'embase (100), recouvre partiellement la face externe de la paroi (133) de l'embase (100) de manière que le capot (200) forme un coffrage perdu à extraire de la chape coulée autour de la boîte de sol.

2. Boîte de sol (10) selon la revendication 1, dans laquelle chaque paroi (120,130) de l'embase (100) est rapportée sur le fond plat (110) de l'embase (100).

3. Boîte de sol (10) selon l'une des revendications précédentes, dans laquelle la paroi (120,130) de l'embase (100) comporte au moins un panneau vertical (131), s'élevant perpendiculairement au fond plat (110), pourvu de découpes (131A) qui délimitent au moins une portion retirable pour former une ouverture d'accueil d'une extrémité d'un conduit de cheminement positionné sur le sol.

4. Boîte de sol (10) selon la revendication précédente, dans laquelle la face interne dudit panneau vertical (131) comprenant lesdites découpes (131A) est recouverte d'un film de protection adhésif retirable qui obture lesdites découpes (131A).

5. Boîte de sol (10) selon l'une des revendications précédentes, dans laquelle l'embase (100) comporte quatre parois latérales (130) raccordées entre elles par des coins (120) pour délimiter un logement parallélépipédique et la paroi frontale (210) du capot présente un contour carré ou rectangulaire bordé par quatre parois latérales (220) qui recouvrent partiellement les faces externes des parois latérales (130) de l'embase, les coins (220A) du capot étant positionnés bord à bord avec les coins (125) de l'embase (100).

6. Boîte de sol (10) selon la revendication précédente, dans laquelle chaque coin (120) de l'embase est une pièce monobloc moulée en matière plastique ou synthétique fixée sur le fond plat (110) au moyen d'une vis (V).

7. Boîte de sol (10) selon l'une des deux revendications précédentes, dans laquelle chaque coin (120) de l'embase (100) comprend deux montants verticaux (121,122) orientés à angle droit l'un part rapport à l'autre et reliés l'un à l'autre par une partie centrale (123) formant un angle, les deux montants verticaux (121,122) et la partie centrale (123) étant surmontés d'une plate-forme (124) horizontale formant un appui pour deux parois latérales (130) adjacentes de l'embase (100), chaque coin (120) comportant en outre une cornière (125) s'élevant perpendiculairement à ladite plate-forme (124) et comprenant un bord libre (125A) placé bord à bord avec le bord d'une découpe (221) prévue dans un des quatre coins du capot (200).

8. Boîte de sol (10) selon la revendication précédente, dans laquelle la plate-forme (124) de chaque coin (120) de l'embase (100) comporte à l'arrière, de part et d'autre de la cornière (125), un puits taraudé (126) de réception d'une vis (V), qui débouche sur ladite plate-forme (124) pour la fixation d'une paroi latérale (130) de l'embase (100) audit coin (120), et la partie centrale (123) de chaque coin (120) de l'embase (100) comporte à l'arrière un puits taraudé (129) qui débouche à la base du coin, à l'opposé de ladite plate-forme (124), pour la réception d'une vis (V) de fixation dudit coin au fond plat (110) de l'embase (100).

9. Boîte de sol (10) selon l'une des deux revendications précédentes, dans laquelle la plate-forme (124) de chaque coin (120) de l'embase (100) porte en saillie un tenon (127) engagé dans un logement (132B) d'une paroi latérale (130) de l'embase (100) pour assurer le bon positionnement de ladite paroi latérale (130) par rapport audit coin (120).

10. Boîte de sol (10) selon l'une des revendications 7 à 9, dans laquelle chaque paroi latérale (130) de l'embase se présente sous la forme d'une cornière en angle droit dont une aile longitudinale (131) forme un panneau vertical positionné perpendiculairement au fond plat (110) de l'embase, ce panneau vertical (131) présentant deux extrémités qui recouvrent partiellement la face externe de montants verticaux (121,122) de deux coins (120) de l'embase, et dont l'autre aile longitudinale (132) forme un panneau horizontal positionné parallèlement audit fond plat (110) de l'embase, ce panneau horizontal (132) présentant deux extrémités en appui sur les plates-formes (124) desdits deux coins (120) de l'embase, et comportant un retour (133) vertical qui s'étend dans le prolongement de deux ailes (125B,125C) des cornières (125) desdits deux coins (120) situées le long d'un même côté de l'embase, pour fermer l'espace entre lesdites cornières (125), la face externe de ce retour (133) étant partiellement recouverte par une paroi latérale (220) du capot (200).

11. Boîte de sol (10) selon l'une des revendications précédentes, dans laquelle le fond plat de l'embase est formé par une plaque pleine.

12. Boîte de sol (10) selon l'une des revendications 1 à 10, dans laquelle le fond plat (110) de l'embase est formé par un cadre plat.

13. Boîte de sol (10) selon l'une des revendications 11 et 12, dans laquelle le fond plat (110) et chaque paroi latérale (130) de l'embase sont réalisés en tôle.

14. Boîte de sol (10) selon l'une quelconque des revendications précédentes, dans laquelle la paroi frontale (210) du capot comporte au moins une fente (230 ; 240 ; 250 ; 260 ; 270 ; 280 ; 290 ; 330 ; 340) qui délimite une partie repliable (213) pour former une zone (212) de prise en main du capot (200) par un installateur afin de l'extraire de sa coopération avec l'embase.

15. Boîte de sol (10) selon l'une des revendications précédentes, dans laquelle le capot (200) est réalisé en tôle découpée et pliée.

## Patentansprüche

1. Bodenbox (10), die in einen auf einem Boden gegossenen Estrich einzubauen ist, wobei die Box
- eine Bodenplatte (100), die dazu bestimmt ist, auf dem Boden befestigt zu werden, und die eine Wandung (120, 130) aufweist, die einen Aufnahmeraum mit einer einem flachen Boden (110) gegenüberliegenden vorderen Öffnung (101) begrenzt, und
- einen Deckel (200), der eine von wenigstens einer Seitenwand (220) umgebene vordere Wand (210) aufweist und der an der Bodenplatte (100) derart angebracht ist, daß die vordere Wand (210) die vordere Öffnung (101) des Aufnahmeraums abschließt,
aufweist,
**dadurch gekennzeichnet, daß** ein Teil des freien Rands (221) der Seitenwand (220) des Deckels (200) Kante an Kante mit einem Teil des freien Rands (125A) der Wandung (125) der Bodenplatte (100) angeordnet ist, während ein sich senkrecht zum flachen Boden (110) der Bodenplatte (100) erstreckender Teil der Seitenwand (220) des Deckels (200) teilweise die Außenseite der Wandung (133) der Bodenplatte (100) abdeckt, so daß der Deckel (200) eine aus dem um die Bodenbox herum gegossenen Estrich herauszunehmende verlorene Schalung bildet.

2. Bodenbox (10) gemäß Anspruch 1, bei der jede Wand (120, 130) der Bodenplatte (100) am flachen Boden (110) der Bodenplatte (100) angebracht ist.

3. Bodenbox (10) gemäß einem der vorangehenden Ansprüche, bei der die Wandung (120, 130) der Bodenplatte (100) wenigstens eine vertikale, sich senkrecht auf dem flachen Boden (110) erhebende Platte (131) aufweist, die mit Ausschnitten (131A) versehen ist, die wenigstens einen entfernbaren Teil aufweisen, um eine Aufnahmeöffnung für ein Ende einer auf dem Boden angeordneten Leitungsführung zu bilden.

4. Bodenbox (10) gemäß dem vorangehenden Anspruch, bei der die Innenseite der die Ausschnitte (131A) aufweisenden vertikalen Platte (131) mit einem adhäsiven, abziehbaren Schutzfilm versehen ist, der die Ausschnitte (131A) verschließt.

5. Bodenbox (10) gemäß einem der vorangehenden Ansprüche, bei der die Bodenplatte (100) vier Seitenwände (130) aufweist, die miteinander durch Ecken (120) verbunden sind, um einen quaderförmigen Aufnahmeraum zu begrenzen, und die vordere Wand (210) des Deckels eine quadratische oder rechteckige Kontur aufweist, die von vier Seitenwänden (220) umgeben ist, die die Außenseiten der Seitenwände (130) der Bodenplatte teilweise abdecken, wobei die Ecken (220A) des Deckels Kante an Kante mit den Ecken (125) der Bodenplatte (100) angeordnet sind.

6. Bodenbox (10) gemäß dem vorangehenden Anspruch, bei der jede Ecke (120) der Bodenplatte ein aus Plastikmaterial oder synthetischem Material einstückig gegossenes Stück ist, das mittels einer Schraube (V) auf dem flachen Boden (110) befestigt ist.

7. Bodenbox (10) gemäß einem der beiden vorangehenden Ansprüche, bei der jede Ecke (120) der Bodenplatte (100) zwei vertikale Holme (121, 122) aufweist, die zueinander rechtwinklig ausgerichtet sind und miteinander durch einen einen Winkel bildenden mittleren Teil (123) verbunden sind, und der mittlere Teil (123) von einer Plattform (124) überragt wird, die ein Auflager für zwei anliegende Seitenwände (130) der Bodenplatte (100) bildet, wobei jede Ecke (120) außerdem ein Winkelstück (125) aufweist, das sich senkrecht zur Plattform (124) erhebt und einen freien Rand (125A) aufweist, der Rand an Rand mit dem Rand eines an einer der vier Ecken des Deckels (200) vorgesehenen Ausschnitts (221) angeordnet ist.

8. Bodenbox (10) gemäß dem vorangehenden Anspruch, bei der die Plattform (124) jeder Ecke (120) der Bodenplatte (100) zur Aufnahme einer Schraube (V) zur Befestigung einer Seitenwand (130) der Bodenplatte (100) hinten beiderseits des Winkelstücks (125) eine mit einem Innengewinde versehene Vertiefung (126) aufweist, die in die Plattform (124) mündet, und der mittlere Teil (123) jeder Ecke (120) der Bodenplatte (100) zur Aufnahme einer Schraube (V) zur Befestigung der Ecke am flachen Boden (110) der Bodenplatte (100) hinten eine mit einem Innengewinde versehene Vertiefung (129) aufweist, die zur Plattform (124) entgegengesetzt in den Grund der Ecke mündet.

9. Bodenbox (10) gemäß einem der beiden vorangehenden Ansprüche, bei der die Plattform (124) jeder Ecke (120) der Bodenplatte (100) einen hervorstehenden Stift (127) aufweist, der in einen Aufnahmeraum (132B) einer Seitenwand (130) der Bodenplatte (100) ragt, um die richtige Position der Seitenwand (130) zur Ecke (120) sicherzustellen.

10. Bodenbox (10) gemäß einem der Ansprüche 7 bis 9, bei der jede Seitenwand (130) der Bodenplatte die Form eines Winkelstücks mit rechtem Winkel aufweist, von dem ein Längsschenkel (131) eine vertikale, zum flachen Boden (110) der Bodenplatte rechtwinklig angeordnete Platte bildet, wobei die vertikale Platte (131) zwei Enden aufweist, die die Außenseite senkrechter Holme (121, 122) zweier Ecken (120) der Bodenplatte teilweise abdeckt, und von dem der andere Längsschenkel (132) zwei auf den Plattformen (124) der beiden Ecken (120) der Bodenplatte aufliegende Enden hat und eine senkrechte Rückführung (133) aufweist, die sich in Verlängerung zweier Schenkel (125B, 125C) der entlang einer selben Seite der Bodenplatte angeordneten Winkelstücke (125) der beiden Ecken (120) erstreckt, um den Raum zwischen den Winkelstücken (125) abzuschließe, wobei die Außenseite der Rückführung (133) teilweise durch eine Seitenwand (220) des Deckels (200) abgedeckt ist.

11. Bodenbox (10) gemäß einem der vorangehenden Ansprüche, bei der der flache Boden der Bodenplatte durch eine vollständige Platte gebildet ist.

12. Bodenbox (10) gemäß einem der Ansprüche 1 bis 10, bei der der flache Boden (110) der Bodenplatte durch einen flachen Rahmen gebildet ist.

13. Bodenbox (10) gemäß einem der Ansprüche 11 und 12, bei der der flache Boden (110) und jede Seitenwand (130) der Bodenplatte aus Blech gefertigt sind.

14. Bodenbox (10) gemäß einem der vorangehenden Ansprüche, bei der die vordere Wand (210) des Deckels wenigstens einen Schlitz (230; 240; 250; 260; 270; 280; 290; 330; 340) aufweist, der einen umbiegbaren Teil (213) begrenzt, um eine Zone (212) für die Handhabung des Deckels (200) durch einen Installateur zu bilden, um selbigen aus der Zusammenwirkung mit der Bodenplatte zu lösen.

15. Bodenbox (10) gemäß einem der vorangehenden Ansprüche, bei der der Deckel (200) aus ausgeschnittenem und gefaltetem Blech gefertigt ist.

## Claims

1. A floor box (10) to be embedded in a screed poured on a floor, with said box including:
- a base (100) intended to be attached to the floor, including a wall (120, 130) which defines a cavity with a front opening opposite a flat bottom (110), and
- a cover (200) comprising a front wall (210) bordered by at least one side wall (220), connected on the base so that the front wall (210) closes the front opening (101) of said cavity.
**characterized in that** a portion of the free edge (221) of the side wall (220) of the cover (200) is positioned edge to edge with a portion of the free edge (125A) of the wall (125) of the base (100), while a portion of the side wall (220) of the cover (200), extending perpendicularly to the flat bottom (110) of the base (100), partially covers the outer surface of the wall (133) of the base (100) so that the cover (200) forms a permanent formwork to be extracted from the screed around the floor box.

2. A floor box (10) according to claim 1, wherein each wall (120, 130) of the base (100) is connected on the flat bottom (110) of the base (100).

3. A floor box (10) according to one of the preceding claims, wherein the wall (120, 130) of the base (100) comprises at least one vertical panel (131), extending perpendicularly to the flat bottom (110) provided with cuts (131A) defining at least one removable portion to form an opening for accommodating an end of a cable duct positioned on the floor.

4. A floor box (10) according to the preceding claim, wherein the inner face of said vertical panel (131) comprising said cuts (131A) is covered with a removable adhesive protective film which closes said cuts (131A).

5. A floor box (10) according to one of the preceding claims, wherein the base (100) comprises four side walls (130) connected together by corners (120) to define a parallelepiped cavity, and the front wall (210) of the cover has a square or rectangular shape bordered by four side walls (220) which partially cover the outer faces of the side walls (130) of the base, with the corners (220A) of the cover being positioned edge to edge with the corners (125) of the base (100).

6. A floor box (10) according to the preceding claim, wherein each corner (120) of the base is a one-piece molded part made of a plastic or synthetic material attached to the flat bottom (110) by means of a screw (V).

7. A floor box (10) according to one of the preceding two claims, wherein each corner (120) of the base (100) comprises two vertical uprights (121, 122) oriented at right angles relative to each other and connected to one another by a central portion (123) forming an angle, with the two vertical uprights (121, 122) and the central portion (123) being topped by a horizontal platform (124) forming a support for two adjacent side walls (130) of the base (100), with each corner (120) further comprising corner piece (125) extending perpendicularly to said platform (124) and comprising a free edge (125A) positioned edge to edge with the edge of a cut (221) provided in one of the four corners of the cover (200).

8. A floor box (10) according to the preceding claim, wherein the platform (124) of each corner (120) of the base (100) has at the back, on either side of the corner piece (125), a threaded bore (126) for receiving a screw (V), which opens on said platform (124) for attaching a side wall (130) of the base (100) to said corner (120), and the central portion (123) of each corner (120) of the base (100) comprises at the back a threaded bore (129) which opens on the base of the corner, opposite said platform (124), for receiving a screw (V) for attaching said corner to the flat bottom (110) of the base (100).

9. A floor box (10) according to one of the preceding two claims, wherein the platform (124) of each corner (120) of the base (100) carries a projecting tenon (127) engaged in a cavity (132B) of a side wall (130) of the base (100) to ensure the proper positioning of said side wall (130) relative to said corner (120).

10. A floor box (10) according to one of claims 7 to 9, wherein each side wall (130) of the base is in the form of a right-angled corner piece, one longitudinal wing (131) of which forms a vertical panel positioned perpendicularly to the flat bottom (110) of the base, with such vertical panel (131) having two ends which partially cover the outer face of the vertical uprights (121, 122) of two corners (120) of the base, and the other longitudinal wing (132) of which forms a horizontal panel positioned parallel to said flat bottom (110) of the base, with such horizontal panel (132) having both ends supported by the platforms (124) of said two corners (120) of the base, and having a vertical return (133) extending as a continuation of said two wings (125B, 125C) of the corner pieces (125) of said two corners (120) located along a same side of the base, so as to close the space between said corner pieces (125), with the outer face of such return (133) being partially covered by a side wall (220) of the cover (200).

11. A floor box (10) according to one of the preceding claims, wherein the flat bottom of the base is formed by a solid plate.

12. A floor box (10) according to one of claims 1 to 10, wherein the flat bottom (110) of the base is formed by a flat frame.

13. A floor box (10) according to one of claims 11 and 12, wherein the flat bottom (110) and each side wall (130) of the base are made of metal sheet.

14. A floor box (10) according to any one of the preceding claims, wherein the front wall (210) of the cover comprises at least one slot (230; 240; 250; 260; 270; 280; 290; 330; 340) defining a folding portion (213) to form a zone (212) for an installer to grip the cover (200) in order to extract it from its cooperation with the base

15. A floor box (10) according to one of the preceding claims, wherein the cover (200) is made of a cut and folded metal sheet.
